# EUROPÄISCHE PATENTANMELDUNG

(11) **EP 2 559 668 A1**
(43) Veröffentlichungstag der Anmeldung: **20.02.2013**
(21) Anmeldenummer: 12179758.3
(22) Anmeldetag: 09.08.2012
(51) Int. Cl.: C02F 9/00

(54) **Wasserbereiter**

(30) Priorität: 16.08.2011 DE 102011081054
(71) Anmelder: BSH Bosch und Siemens Hausgeräte GmbH, 81739 München (DE)
(72) Erfinder: Cantoni, Stefano, 83052 Bruckmühl (DE); Heilmaier, Marion, 83317 Teisendorf (DE)

(57) **Zusammenfassung**

Offenbart ist ein Wasserbereiter zur Bereitstellung von gereinigtem Wasser, mit einem Wassertank, mit einem vom Wassertank wegführenden Auslaufsystem und mit einem Filtersystem zum Reinigen des Wassers, das in das Auslaufsystem integriert ist und ein Filterelement aufweist, wobei das Filterelement eine Lebensdauer hat, die einer Wassertankmenge entspricht und wobei das Filtersystem eine Wechseleinrichtung zur Aufnahme des Filterelementes hat.

Die Erfindung eignet sich insbesondere zur Bereitstellung eines Wasserbereiters, der mit einem komplexreduzierten Filterelement eine verlässliche Bereitstellung von kaltem und temperiertem Trinkwasser ermöglicht.

## Beschreibung

Die Erfindung betrifft einen Wasserbereiter zur Bereitstellung von gereinigtem Wasser nach dem Oberbegriff des Patentanspruchs 1, mit einem Wassertank, mit einem von dem Wassertank wegführenden Auslaufsystem und mit einem Filtersystem zum Reinigen des Wassers, das in das Auslaufsystem integriert ist und ein Filterelement aufweist.

Wasserbereiter zur Bereitstellung von Trinkwasser, insbesondere im häuslichen Bereich, haben häufig ein Filtersystem mit einem Aktivkohlefilter oder einem Ionentauscher. Prinzipiell sind zwei verschiedene Anordnungen des Filtersystems bekannt.

Zum einen kann das Filtersystem im Wassertank angeordnet sein. Das Wechselintervall des Filterelementes richtet sich nach einer festen zeitlichen Vorgabe und beträgt etwa einen Monat. Um ein Keimwachstum in dem Filterelement zu verhindern, ist diesem regelmäßig antibakterielles Silber zugesetzt.

Zum anderen kann das Filterelement im Auslaufsystem zwischen einem Wassertank und einem Wasserauslass integriert sein. Derartige Wasserbereiter sind beispielsweise in der EP 1 562 863 B1 und in der EP 1 562 865 B1 gezeigt. Jedoch kann auch bei diesem Prinzip ein Keimwachstum in dem Filterelement auftreten. Zudem ist das Wechseln des Filterelementes aufwendig.

Aufgabe der Erfindung ist es, einen Wasserbereiter zu Bereitstellung von gereinigtem Wasser zu schaffen, der die vorgenannten Nachteile beseitigt, bei dem ohne den Zusatz von antibakteriellen Elementen ein Keimwachstum in einem Filterelement verhindert wird und das einen einfachen Austausch des Filterelements ermöglicht.

Diese Aufgabe wird gelöst durch einen Wasserbereiter mit den Merkmalen des Patentanspruchs 1. Vorteilhafte Aus- und Weiterbildungen, welche einzeln oder in Kombination miteinander einsetzbar sind, sind Gegenstand der jeweils abhängigen Ansprüche.

Ein erfindungsgemäßer Wasserbereiter zur Bereitstellung von gereinigtem Wasser hat einen Wassertank, ein von dem Wassertank wegführendes Auslaufsystem und ein Filtersystem zum Reinigen des Wassers, das in das Auslaufsystem integriert ist und ein Filterelement aufweist. Erfindungsgemäß hat das Filterelement eine Lebensdauer, die einer Wassertankmenge entspricht. Zur Aufnahme des Filterelementes hat das Filtersystem eine Wechseleinrichtung.

Dadurch, dass die Lebensdauer des Filterelementes gegenüber den herkömmlichen Filterelementen stark reduziert ist, ist dieses entsprechend häufig auszuwechseln. Hierdurch wird zum einen ein Keimwachstum in dem Filterelement ohne den Zusatz von beispielsweise antibakteriellem Silber wirkungsvoll verhindert. Zum anderen kann das Filterelement kleiner als herkömmliche Filterelemente ausgeführt sein, da es nur eine geringe Filterleistung aufweisen muss. Die Wechseleinrichtung erleichtert dabei wesentlich das häufige Wechseln des Filterelementes. Das Filterelement bzw. die Filterelemente sind quasi Einzelportionsfilter, die an unterschiedliche Wasserqualitäten oder unterschiedliche Kundenanforderungen angepasst werden können. Idealerweise haben die Filterelemente ein einheitliches Filterformat, so dass der erfindungsgemäße Wasserbereiter flexibel an verschiedene Wasserqualitäten angepasst werden kann.

Zur Verwendung des Wasserbereiters als ein Wasserkocher kann das Filtersystem eine Heizeinheit aufweisen, die stromabwärts des Filterelements angeordnet ist. Im Gegensatz zu einem herkömmlichen Wasserkocher, bei dem grundsätzlich die gesamte Wassermenge erhitzt wird, wird bei der erfindungsgemäßen Lösung nur eine tatsächlich benötigte Wassermenge erhitzt, wodurch der Wasserbereiter wesentlich energiesparender als ein herkömmliche Wasserkocher ist. Zusätzlich kann die Heizeinheit zur Entkeimung des Wassers verwendet werden.

Zur Entkeimung von nicht erhitztem Wasser ist es vorteilhaft, wenn das Filtersystem eine UV-Bestrahlungseinheit hat, die parallel zur Heizeinheit angeordnet ist.

Durch die stromabwärtige Anordnung der Heizeinheit zum Filterelement wird die Gefahr einer Verkalkung der Heizeinheit wesentlich reduziert. Hierdurch kann vollständig bzw. nahezu vollständig auf einen Einsatz von Entkalkungsmittel, welches häufig umweltbelastend ist, verzichtet werden.

Um eine Überhitzung der Heizeinheit bei leerem Wassertank zu vermeiden, kann das Filtersystem einen dem Wassertank zugeordneten bodenseitigen Füllstandsmesser aufweisen. Der Füllstandsmesser verhindert bei Erreichen eines minimalen Füllstandes und somit bei leerem Wassertank eine Bestromung der Heizeinheit.

Zur Messung einer das Filterelement durchströmten Wassermenge, kann das Filtersystem einen stromabwärtigen Durchflussmesser aufweisen.

Um sicherzustellen, dass das Filterelement rechtzeitig gewechselt wird, kann das Filtersystem eine Wechselanzeige haben, mittels der eine Durchflussmenge und/oder ein Füllstand einem Endverbraucher angezeigt wird.

Bevorzugterweise ist das Filtersystem zwischen einem Förderorgan und einem Entnahmeorgan angeordnet. Das Förderorgan ist beispielsweise eine Pumpe und das Entnahmeorgan ein Entnahmeventil oder ein Entnahmehahn.

Sonstige vorteilhafte Ausführungsbeispiele der Erfindung sind Gegenstand weiterer Unteransprüche.

Die Erfindung eignet sich insbesondere zur Bereitstellung eines Wasserbereiters, der mit einem komplexreduzierten Filterelement eine verlässliche Bereitstellung von kaltem und temperiertem Trinkwasser ermöglicht.

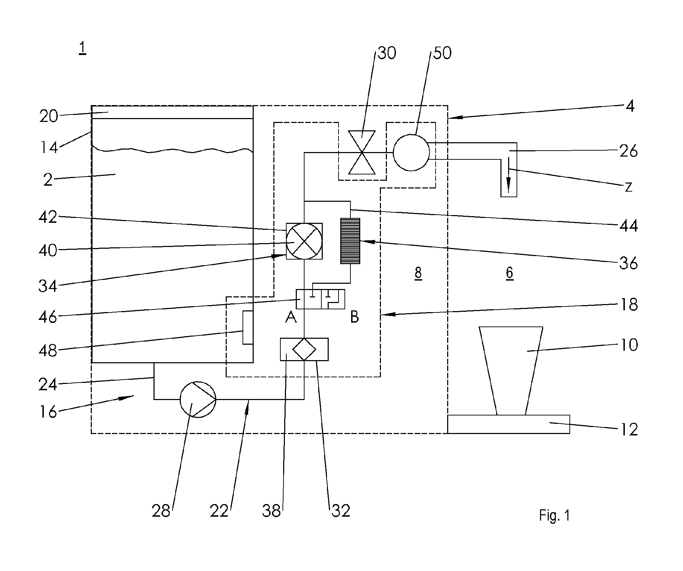

Im Folgenden wird ein bevorzugtes Ausführungsbeispiel der Erfindung anhand einer stark vereinfachten schematischen Darstellung näher erläutert. Die einzige Figur 1 zeigt einen prinzipiellen Aufbau eines bevorzugten Ausführungsbeispiels eines erfindungsgemäßen Wasserbereiters.

Wie in Figur 1 gezeigt, hat ein erfindungsgemäßer Wasserbereiter 1 zur Bereitstellung von gereinigtem Wasser 2 ein Gehäuse 4, das einen äußeren Zapfbereich 6 und einen Innenraum 8 definiert. Der Zapfbereich 6 dient zur Entnahme des gereinigten Wassers 2. Zur Positionierung eines geeigneten Gefäßes 10 hat das Gehäuse 4 einen mit einem Abtropfgitter versehene Auffangschale 12. Der Innenraum 8 dient im Wesentlichen zur Aufnahme eines Wassertanks 14, eines Auslaufsystems 16 und eines Filtersystems 18. Der Wassertank 14 dient zur Bereitstellung des Wassers 2 bzw. einer Wassermenge und hat beispielsweise zur Verwendung im häuslichen Bereich ein Fassungsvermögen von 11 bis 21. Zur Vermeidung einer Verschmutzung des Wassers 2 in dem Wassertank 14 ist dieser mit einem Deckel 20 lösbar verschlossen.

Das Auslaufsystem 16 hat im Wesentlichen ein Auslaufrohr 22, das einen tankseitigen Wassereinlass 24 und einen zapfseitigen Wasserauslass 26 hat. Der Wasserauslass 26 ist aus dem Innenraum 8 des Gehäuses 4 herausgeführt und hat einen nicht bezifferten Zapfabschnitt, der in Richtung der Auffangschale 12 orientiert ist und eine Zapfrichtung z definiert. Zur Ermöglichung einer Verwendung einer Vielzahl von unterschiedlich hohen Gefäßen 10 ist der Wasserauslass 26 höhenverstellbar. Zum Fördern einer geforderten Wassermenge aus dem Wassertank 14 hat das Auslaufsystem 16 eine in dem Auslaufrohr 22 angeordnete Pumpe 28. Zum Auf- und Zusteuern des Auslaufrohrs 22 hat das Auslaufsystem 16 eine stromabwärts der Pumpe 28 angeordnete Armatur 30. Die Armatur ist beispielsweise ein Entnahmeventil oder ein Entnahmehahn und steht mit der Pumpe 28 in Wirkverbindung, so dass bei Betätigung der Armatur 30 ebenfalls die Pumpe 28 angesteuert wird.

Das Filtersystem 18 ist zwischen der Pumpe 28 und der Armatur 30 in dem Auslaufrohr 22 angeordnet. Es hat ein Filterelement 32, eine UV-Bestrahlungseinheit 34 und eine Heizeinheit 36.

Das Filterelement 32 ist beispielsweise ein Aktivkohlefilter, ein Ionentauscher und dergleichen. Es hat eine Lebensdauer, die einer Wassertankmenge entspricht und somit in diesem Ausführungsbeispiel zur Reinigung von 11 bis 21 Wasser geeignet ist. Zur Aufnahme des Filterelements 32 hat das Filtersystem 18 eine Wechseleinrichtung 38, die einen schnellen und einfachen Wechsel des Filterelementes 32 erlaubt. Beispielsweise hat die Wechseleinrichtung 38 einen Einschub, in dem das Filterelement 32 positioniert werden kann und mittels dem das Filterelement 32 dann in das Auslaufsystem 16 eingebracht wird. Die Wechseleinrichtung 38 ist dabei derart ausgebildet, dass das Wasser ohne Leckagen durch das Filterelement 32 gepumpt wird. Die Wechseleinrichtung 38 kommuniziert mit einem nicht gezeigten Steuer- und Regelungssystem des Wasserbereiters 1 und meldet diesem jeden durchgeführten Filterelementenwechsel.

Die UV-Bestrahlungseinheit 34 ist stromabwärts des Filterelementes 32 in dem Auslaufrohr 22 angeordnet und dient zur Entkeimung des Wassers 2 während eines Zapfvorgangs. Sie hat eine UV-Strahlenquelle 40 zum Aussenden von UV-Strahlung, die in einem UV-undurchlässigen Gehäuse 42 angeordnet ist. Durch das Gehäuse 42 ist ein nicht gezeigter Rohrabschnitt des Auslaufrohrs 22 geführt ist, der aus einem UV-Strahlung durchlässigen Material besteht. Vorzugsweise ist das Gehäuse 42 innenseitig mit einer die UV-Strahlung in Richtung des Rohrabschnitts reflektierender Beschichtung versehen.

Die Heizeinheit 36 dient zur Erwärmung der gezapften Wassermenge bis zur Siedetemperatur. Sie ist in einem Parallelrohr 44 zur UV-Bestrahlungseinheit 34 angeordnet, das stromaufwärts der UV-Bestrahlungseinheit 34 von dem Auslaufrohr 22 abgezweigt ist und stromabwärts der UV-Bestrahlungseinheit 34 wieder in das Auslaufrohr 22 mündet. Das Wasser 2 kann durch die UV-Bestrahlungseinheit 34 oder alternativ durch die Heizeinheit 36 geführt werden. Hierzu ist im Abzweigungsbereich des Parallelrohres 44 von dem Auslaufrohr 22 zwischen dem Filterelement 32 und der UV-Bestrahlungseinheit 34 ein 3/2-Wegeventil 46 vorgesehen. Das 3/2-Wegeventil 46 hat drei Anschlüsse und zwei Schaltstellungen A, B. In der gezeigten Schaltstellung A wird das dem Wassertank 14 entnommene Wasser 2 durch die Bestrahlungseinheit 34 und in der Schaltstellung B durch die Heizeinheit 36 geführt. Eine Armatur zur Bestätigung des 3/2-Wegeventils 46 ist aus Gründen der Übersichtlichkeit nicht gezeigt.

Um eine Überhitzung der Heizeinheit 36 zu vermeiden, weist das Filtersystem 18 einen Füllstandsmesser 48 auf. Der Füllstandsmesser 48 ist bodenseitig im Wassertank 14 angeordnet und meldet einen minimalen Füllstand an eine nicht gezeigte optische Wechselanzeige. Bevorzugterweise wird das Erreichen des minimalen Füllstands an das Steuer- und Regelungssystem des Wasserbereiters 1 gemeldet, mittels der dann automatisch eine Bestromung der Heizeinheit 36 verhindert wird. Eine Bestromung der Heizeinheit 36 ist erst dann wieder möglich, wenn bei einer Befüllung des Wassertanks 14 der Füllstandsmesser 48 eine Überschreitung des minimalen Füllstandes meldet. Zur Messung einer Erschöpfung des Filterelementes 32 weist das Filtersystem 18 einen Durchflussmesser 50 stromabwärts der Armatur 30 auf. Dieser meldet eine maximale Durchflussmenge an die optische Wechselanzeige und kommuniziert mit dem Füllstandsmesser 48, so dass verlässlich ein Wechsel des Filterelementes 32 angezeigt wird. Bevorzugterweise wird das Erreichen der maximalen Durchflussmenge an das Steuer- und Regelungssystem des Wasserbereiters 1 gemeldet, welches dann eine Bestromung der Pumpe 28 unterbricht und die Unterbrechung erst dann wieder aufhebt, wenn dem Steuer- und Regelungssystem ein Filterelementenwechsel durch die Wechseleinrichtung 38 angezeigt wird.

Offenbart ist ein Wasserbereiter zur Bereitstellung von gereinigtem Wasser, mit einem Wassertank, einem vom Wassertank wegführenden Auslaufsystem und mit einem Filtersystem zum Reinigen des Wassers, das in das Auslaufsystem integriert ist und ein Filterelement aufweist, wobei das Filterelement eine Lebensdauer hat, die einer Wassertankmenge entspricht und wobei das Filtersystem eine Wechseleinrichtung zur Aufnahme des Filterelementes hat.

### Bezugszeichenliste

- 1: Wasserbereiter
- 2: Wasser
- 4: Gehäuse
- 6: Zapfbereich
- 8: Innenraum
- 10: Gefäß
- 12: Auffangschale
- 14: Wassertank
- 16: Auslaufsystem
- 18: Filtersystem
- 20: Deckel
- 22: Auslaufrohr
- 24: Wassereinlass
- 26: Wasserauslass
- 28: Pumpe
- 30: Armatur
- 32: Filterelement
- 34: UV- Bestrahlungseinheit
- 36: Heizeinheit
- 38: Wechseleinrichtung
- 40: UV-Strahlenquelle
- 42: Gehäuse
- 44: Parallelrohr
- 46: Wegeventil 3/2
- 48: Füllstandmesser
- 50: Durchflussmesser

- z: Zapfrichtung

## Patentansprüche

1. Wasserbereiter (1) zur Bereitstellung von gereinigtem Wasser (2), mit einem Wassertank (14), mit einem von dem Wassertank (14) wegführenden Auslaufsystem (16) und mit einem Filtersystem (18) zum Reinigen des Wassers (2), das in das Auslaufsystem (16) integriert ist und ein Filterelement (32) aufweist, **dadurch gekennzeichnet, dass** das Filterelement (32) eine Lebensdauer hat, die einer Wassertankmenge entspricht, und dass das Filtersystem (18) eine Wechseleinrichtung (38) zur Aufnahme des Filterelements (32) hat.

2. Wasserbereiter nach Anspruch 1, wobei das Filtersystem (18) eine Heizeinheit (36) aufweist, die stromabwärts des Filterelementes (32) angeordnet ist.

3. Wasserbereiter nach Anspruch 1 oder 2, wobei das Filtersystem (18) eine UV-Bestrahlungseinheit (34) hat, die parallel zur Heizeinheit (36) angeordnet ist.

4. Wasserbereiter nach Anspruch 1, 2 oder 3, wobei das Filtersystem (18) einen dem Wassertank (14) zugeordneten bodenseitigen Füllstandmesser (48) aufweist.

5. Wasserbereiter nach einem der vorhergehenden Ansprüche, wobei das Filtersystem (18) einen stromabwärtigen Durchflussmesser (50) hat.

6. Wasserbereiter nach einem der vorhergehenden Ansprüche, wobei das Filtersystem (18) eine Wechselanzeige zur Ausgabe eines Füllstand und/oder einer Durchflussmenge hat.

7. Wasserbereiter nach einem der vorhergehenden Ansprüche, wobei das Filtersystem (18) zwischen einem Förderorgan (28) und einem Entnahmeorgan (30) angeordnet ist.
